# EUROPEAN PATENT SPECIFICATION

(11) **EP 2 247 189 B1**
(45) Date of publication and mention of the grant of the patent: **10.08.2011**
(21) Application number: 09717121.9
(22) Date of filing: 10.02.2009
(51) Int. Cl.: A23F 3/14

(54) **TEA COMPOSITION**
TEEZUSAMMENSETZUNG
COMPOSITION DE THÉ

(30) Priority: 03.03.2008 IN MU04352008; 29.07.2008 EP 08161365
(43) Date of publication of application: 10.11.2010
(73) Proprietor: Unilever N.V., 3013 AL Rotterdam (NL); Unilever PLC, London EC4Y 0DY (GB)
(72) Inventor: DOBRIYAL, Rajendra, M, Bangalore 560 066 (IN); MUBEEN, Nikhath, Bangalore 560 066 (IN); SISTLA, Vivekanand, N, Bangalore 560 066 (IN)
(74) Representative: Keenan, Robert Daniel
(86) International application number: PCT/EP2009/051488
(87) International publication number: WO 2009/109443

(56) References cited:
- WO-A1-2004/056332
- WO-A1-2007/004740
- ANONYMOUS: "A Guide to Types of Tea" INTERNET ARTICLE, [Online] 2006, XP002527328 Retrieved from the Internet: URL:http://www.theepicentre.com/Drink/teat ypes.html> [retrieved on 2009-05-11]

## Description

### Technical Field

This invention relates to a tea composition and process of preparation thereof.

### Background and Prior Art

Any discussion of the prior art throughout the specification should in no way be considered as an admission that such prior art is widely known or forms part of the common general knowledge in the field.

Tea is a popular drink that provides refreshment as well as health benefits. Tea is predominantly consumed as a hot beverage, which is prepared by infusion of leaf tea in hot water, to which sugar and/or milk are added according to taste.

Tea provides a unique combination of taste and/or flavour when consumed as hot beverage. However, tea as a hot beverage is not known to provide any cooling sensation, which is perhaps the reason for decline in the consumption of hot tea in summer time, particularly in the Indian subcontinent, where the ambient temperature can be well above 30°C.

Green or black tea with mint is commercially available from various sources. The mint tea, when consumed as a hot beverage, provides some cooling sensation. However, it has been found by the present inventors that the cooling sensation provided by mint tea is not adequate. There is a current need for developing tea compositions that provide relatively higher cooling sensation, and yet provide acceptable organoleptic properties.

PCT Patent Applications WO-A-2007/00470 and WO-A-2004/056332 describe the use of cooling compounds in tea beverages.

In view of the limitations in the prior art, one of the objects of the present invention is to overcome or ameliorate at least one of the disadvantages of the prior art, or to provide a useful alternative.

Another object of the present invention is provide a tea composition that gives relatively higher cooling sensation when consumed as a hot beverage, and yet provides acceptable organoleptic properties.

The present inventors have surprisingly found that combination of tea material with specific plant material provides a tea composition that gives relatively high cooling sensation when consumed as a hot beverage and yet provides acceptable organoleptic properties.

### Summary of Invention

According to the first aspect of the present invention there is provided a tea composition comprising from 85% to 99.99% by weight tea material, and from 0.01% to 0.5% by weight *Vitiveria zizanioides* or extract or oil derived therefrom.

Preferably, *Vitiveria zizanioides* or extract or oil derived therefrom comprises at least 10% by weight Vetiverol.

According to the second aspect of the present invention there is provided a process of preparing a tea composition comprising a step of mixing from 85 to 99.99 parts by weight tea material with 0.01 to 0.5 parts by weight *Vitiveria zizanioides* or oil or extract derived therefrom.

According to the third aspect of the present invention there is provided use of the tea composition comprising from 85% to 99.99% by weight tea material, and from 0.01% to 0.5% by weight *Vitiveria zizanioides* or extract or oil derived therefrom for providing cooling sensation through a hot beverage.

### Detailed Description

### Tea material

The term "tea material" as used herein refers to any material obtained from the plant *Camellia sinensis* or *Camellia assamica* or derived therefrom after processing such a plant material. The plant material includes tea leaf and bud. Some examples of the tea material according to the present invention include steamed and macerated tea material; steamed, macerated and dried tea material, macerated but unfermented tea material; macerated, unfermented and dried tea material; macerated and fermented tea material; macerated, fermented and dried tea material. The tea material can also be any primary, secondary or waste grade obtained by sorting any of the above tea materials. The term tea material includes black tea, green tea and oolong tea. Although the tea material may be subjected to comminution to reduce size prior to extraction, both coarse as well as fine tea materials can be used.

It is particularly preferred that the tea material is black tea.

The tea composition comprises from 85 to 99.99%, preferably from 85 to 98.5% and more preferably from 90 to 94.5% by weight tea material.

### Vitiveria zizanioides or oil or extract derived therefrom

*Vitiveria zizanioides* or Vetiver is a perennial grass commonly called as 'Khus' or Vetiver plant. It is a native of central part of the Asian Continent. Vetiver has a deep, dense, and strong fibrous root system which can grow to a depth of 3 meters. The roots are commonly used for extraction of oil commonly known as Vetiver oil or khus oil.

Although plant material obtained from any part of *Vitiveria zizanioides* can be used according to the present invention, root of *Vitiveria zizanioides* is particularly preferred. Although dried and comminuted root can be used according to the present invention, it is particularly preferred that the tea composition comprises extract or oil derived from root of *Vitiveria zizanioides.*

The extract of *Vitiveria zizanioides* is obtained by extraction of plant material, preferably of roots of *Vitiveria zizanioides* in water or organic food grade solvent. The oil of *Vitiveria zizanioides* is obtained, for example, by distillation of plant material, preferably root material, with water and/or steam followed by separation of oil from the water phase.

The extract or oil of *Vitiveria zizanioides* may be in liquid or solid form. The liquid extract or oil may be spray dried using solid powdered carriers to form a free flowing powder. Suitable carriers include modified starches, gums and/or polysaccharides.

The tea composition comprises from 0.01% to 0.5%, preferably from 0.02% to 0.4% and more preferably from 0.05% to 0.08% by weight *Vitiveria zizanioides* or oil or extract derived therefrom.

*Vitiveria zizanioides* or oil or extract derived therefrom comprises at least 10% by weight Vetiverol. Vetiverol is a marker compound (CAS-NO 68129-81-7) known to be present in roots of *Vitiveria zizanioides. Vitiveria zizanioides* or oil or extract derived therefrom comprises preferably from 10 to 70%, more preferably from 25 to 50% and most preferably from 30 to 40% by weight Vetiverol.

Without wishing to be limited by theory, it is believed that vetiverol is the ingredient of extract or oil of *Vitiveria zizanioides*, that provides the cooling sensation. As an equivalent to the use of extract or oil of *Vitiveria zizanioides,* it is envisaged that the tea composition may comprise vetiverol instead of *Vitiveria zizanioides* or oil or extract derived therefrom.

### Mint flavour

The tea composition may further comprise mint flavour. The mint flavor is preferably selected from peppermint flavour, spearmint flavour, or a mixture thereof. Mint refers to variety of Mentha species in Lamiaceae family. Some examples of the mint species that can be used according to the present invention include, but are not limited to *Mentha piperita* (Peppermint), *Mentha Arvensis* and *Mentha spicata* (Spearmint). The mint flavour is preferably extracted from the leaves of the plant.

The mint flavour may be natural or synthetic. However, it is particularly preferred that the mint flavour is natural extract. The mint flavour may be in liquid or solid form. Both the forms can be used according to the present invention.

The tea composition comprises preferably from 0.01% to 1.0%, more preferably from 0.02% to 0.8% and most preferably from 0.06% to 0.1% by weight mint flavour.

### Food grade binder

The tea composition may further comprise a food grade binder. The food grade binder is preferably selected from a polysaccharide, natural or modified starch, gum, unrefined sugar, or a mixture thereof.

Some examples of polysaccharides that can be used as food grade binder include, but are not limited to maltodextrin. Commercially available maltodextrin such as C DryMD® of Cargill Inc. can be used according to the present invention.

Some examples of natural starches that can be used as food grade binder include, but are not limited to tapioca starch and corn starch.

Some examples of modified starches that can be used as food grade binder include, but are not limited to emulsifying starches and stabilized starches. Commercially available starches such as HICAP® (National Starch), C EmTex®, C EmCap®, C DeliTex® (Cargill Inc.) can be used according to the present invention.

Unrefined sugar is one of the preferable food grade binders that can be used according to the present invention. Traditionally, unrefined sugar is obtained from sugarcane, date palm, sago, and/or coconut palm. Unrefined sugar is also known as jaggery, or "gur" in Hindi.

Some examples of gums that can be used as food grade binder include, but are not limited to, gum acacia, gum Arabica, gum ghatti, gellan gum, cellulose gum and xanthan gum. Commercially available gums such as KELTROL®, CEKOL®, GENU®, KELCOGEL®, KELGUM® (all from CPKELCO, India) can be used according to the present invention.

It is particularly preferred that the food grade binder is a modified starch.

The tea composition preferably comprises from 0.01 to 5%, more preferably from 0.2 to 3% and most preferably from 0.5% to 2.0% by weight food grade binder.

### Other ingredients of the tea composition

The tea material can further comprise further flavouring agents. Any natural flavour or flavouring substance commonly used with tea may be added to the tea composition of the present invention. The flavouring agent may be a spice flavour, a fruit flavour, flowery flavour, and/or sweet flavour.

Spice flavours include, but are not limited to ginger, cardamom, fennel, and cinnamon. Fruit flavours include, but are not limited to, bergamot, lemon, apple, and peach.

Additional flavouring agents, if present, are preferably in an amount of from 0.01% to 5%, more preferably from 0.2% to 3% and most preferably from 0.5% to 2.0% by weight of the tea composition.

It is particularly preferred that the additional flavouring agent, if present, is a spice flavour. It is further preferred that the spice flavour is selected from ginger, cardamom, cinnamon, fennel or mixture thereof. It is particularly preferred that the spice flavour is fennel.

The tea composition comprises preferably less than 10%, more preferably less than 8% and most preferably less than 6% moisture.

### Process of preparation of the tea composition

The tea composition according to the present invention is conveniently prepared by a process comprising a step of mixing from 85 to 99.99 parts by weight tea material with 0.01 to 0.5 parts by weight *Vitiveria zizanioides* or oil or extract derived therefrom.

The tea composition according to the preferred aspect of the present invention can be prepared by mixing from 85 to 99.99 parts by weight tea material, 0.01 to 0.5 parts by weight *Vitiveria zizanioides* or oil or extract derived therefrom, and from 0.01 to 1 parts by weight mint flavour.

A process wherein all the ingredients are mixed together can be used according to the present invention. However, the tea compositions prepared by a dry-mixing route may lead to non-uniform mixing and distribution, particularly in large scale manufacturing processes. Furthermore, any flavour ingredients which are in solid form get segregated from the bulk of the tea composition. Also, any ingredients that are in liquid form and in relatively small proportion to the tea may coat only a small portion of the tea. All of these problems cause difficulties in packaging and maintenance of quality of the tea composition. In particular, the non-uniform mixing is believed to have a negative impact on the organoleptic properties of the end-cup, particularly when the tea composition is manufactured in large scale. Without wishing to be limited by theory, it is believed that the problems associated with non-uniform mixing of ingredients in the tea composition are overcome by the use of the process of the present invention described below.

According to a preferred aspect of the invention, there is provided a process of preparing a tea composition including the steps of:
a. forming an emulsion of from 0.01 to 5 parts by weight of a food grade binder in water at a weight ratio from 1:2 to 1:10;
b. blending from 0.01 to 0.5 parts by weight *Vitiveria zizanioides* or oil or extract derived therefrom with the emulsion to form a flavour coating blend;
c. mixing the flavour coating blend with 85 to 99.99 parts by weight of the tea material, and;
d. drying the mixed material to reduce the moisture content below 10 parts by weight to obtain the tea composition.

It is particularly preferred that the step (c) includes mixing the flavour coating blend with from 5 to 80 parts by weight of the tea material to prepare a premix, followed by mixing of the balance 5 to 94.99 parts by weight of the tea material.

It is further preferred that the step (b) includes blending 0.01 to 1 parts by weight mint flavour with *Vitiveria zizanioides* or oil or extract derived therefrom and the emulsion.

It is preferred that the extract or oil that is in liquid form, is blended with the emulsion of food grade binder. The extract or oil, if in solid form, is preferably mixed with the tea material prior to the step (c).

It is preferred that the flavour that is in liquid form, is blended with the emulsion of the food grade binder. The flavour, if in solid form, is preferably mixed with the tea material prior to the step c.

### Use of the tea composition

According to one aspect, there is provided use of a tea composition comprising from 85% to 99.99% by weight tea material, and from 0.01% to 0.5% by weight *Vitiveria zizanioides* or oil or extract derived therefrom, for providing cooling sensation through a hot beverage.

### Examples

The invention will now be demonstrated with examples. The examples are by way of illustration only and do not limit the scope of the invention in any manner.

Black tea, originating from West Bengal, India, was procured at tea auctions in Kolkata, India. Khus extract (product code VET1000) was procured from Synthite Industrial Chemicals Ltd, Kerala, India. The khus extract was in liquid form and contained 31% vetiverol. Mint flavour was procured from IFF (International Flavours and Fragrances India Ltd., Chennai, India, flavour code SN537407). The mint flavour was in the form of granules.

The following tea compositions were prepared and used in the examples. The black tea used in the examples had about 5% moisture. The % by weight of black tea given below is on wet basis, i.e., it includes the weight of moisture in the tea. Further, all the tea compositions comprise 0.9% by weight food grade binder (a mixture of HICAP®, maltodextrin and gum Acacia).

The final tea compositions are given in Table 1.

**Table 1: Details of tea compositions**

| Ex No | Black tea (% by weight) | Khus extract (% by weight) | Mint flavour (% by weight) |
|---|---|---|---|
| 1 | 99.08 | 0.02 | - |
| 2 | 99.04 | 0.06 | - |
| 3 | 98.70 | 0.4 | - |
| 4 | 98.96 | 0.06 | 0.08 |
| A | 99.10 | - | - |
| B | 99.02 | - | 0.08 |

The process used for preparation of the above examples is described below:

### Process of preparing the tea composition

The tea composition of Example 1 was prepared according to the process given below.

1.5 g of modified starch (HICAP®), 1.8 g of Maltodextrin and 1.2 g of Gum Acacia were mixed and emulsified in 10.5 g of water (for 5 minutes) to make a 15 g of 30% emulsion of the solids in water. Khus extract (0.1 g) was added to this emulsion and mixed well with the help of a high shear mixer (for 5 minutes) to form a flavour emulsion. The flavour emulsion was then sprayed onto 145 g of black tea with 5% moisture content, and mixed in a Hobart mixer for 7 minutes. This was blended well for 5 minutes to form a wet mix of flavours and tea.

The wet mix was then dried to moisture below 6% to get the flavoured tea concentrate. This concentrate was then blended with 350 g of black tea to make 500 g of the tea composition with 0.02% khus extract.

The other tea compositions were prepared in a similar manner, except for the composition of Example 4. In Example 4, the tea composition further comprised a mint flavour in granule form. The mint flavour in granule form (0.4 g) was added to 145 g of black tea, prior to spraying of the flavour emulsion prepared in the manner similar to that of Example 1.

### Evaluation of cooling sensation and organoleptic properties of end-cup

Preparation of end-cup: A mixture of 60 ml water and 40 ml milk was prepared and to this mixture, 2 g of tea composition and 4 g of sugar were added. The mixture was then brought to boil and simmered for a minute and then strained and served.

The panel consisted of nine panellists who were habitual tea drinkers in the age group of 23 years to 48 years.

The end-cups of tea prepared using various tea compositions were evaluated by panellists for cooling sensation and also for overall taste and flavour. The cooling sensation was rated on a scale of 0 to 10 with a score of 10 indicating the highest cooling sensation. Overall taste and flavour were also rated on as scale of 0 to 10 with a score of 10 indicating most preferred taste and flavour.

The results for examples 1-4 and comparative examples A and B are given in Table 2.

**Table 2: Cooling sensation and organoleptic properties**

| Ex No | Average score for cooling sensation | Average score for overall taste and flavour |
|---|---|---|
| 1 | 3.44 | 4.28 |
| 2 | 4.39 | 5.28 |
| 3 | 5.22 | 4.00 |
| 4 | 5.39 | 6.78 |
| A | 2.11 | 4.22 |
| B | 4.00 | 6.11 |

The tea compositions comprising khus oil in the specific range according to the present invention (Examples 1-4) provide good cooling sensation as well as acceptable organoleptic properties whilst the tea composition that does not comprise khus oil (Comparative Example A) does not provide acceptable cooling sensation. It is further seen that increasing the level of khus oil beyond particularly preferred range results into some reduction of taste and flavour score although within the acceptable range whilst the scores on cooling sensation continue to increase with the increase in the level of khus oil in the tea composition. The beneficial effect of addition of mint flavour in the tea composition comprising khus oil is demonstrated by surprising increase in scores of Example 4 over the scores of Example 2 and of Comparative Example B. Examples 2 and 3 provide relatively higher cooling sensation as compared to the comparative example B. Although the score of cooling sensation of Example 1 is lower than that of comparative example B, it should be noted that the amount of khus extract in Example 1 is far less than the amount of mint flavour in comparative example B.

It will be appreciated that the tea composition according to the present invention provides an end-cup of tea that gives a cooling sensation, surprisingly when consumed as a hot beverage, and yet provides acceptable organoleptic properties.

## Claims

1. A tea composition comprising from 85% to 99.99% by weight tea material, and from 0.01% to 0.5% by weight *Vitiveria zizanioides* or extract or oil derived therefrom.

2. A tea composition as claimed in claim 1 comprising 0.02% to 0.4% by weight *Vitiveria zizanioides* or extract or oil derived therefrom.

3. A tea composition as claimed in claim 1 or claim 2 further comprising from 0.01% to 1% mint flavour.

4. A tea composition as claimed in claim 3 wherein said mint flavour is selected from peppermint flavour, spearmint flavour, or a mixture thereof.

5. A tea composition as claimed in any one of the preceding claims wherein said *Vitiveria zizanioides* or extract or oil derived therefrom comprises at least 10% by weight Vetiverol.

6. A tea composition as claimed in any one of the preceding claims comprising 0.05% to 5% by weight food grade binder.

7. A tea composition as claimed in claim 6 wherein said binder is selected from a polysaccharide, natural or modified starch, gum, unrefined sugar, or a mixture thereof.

8. A tea composition as claimed in claim 7 wherein said binder comprises a modified starch.

9. A tea composition as claimed in any one of the preceding claims wherein said tea material is black tea.

10. A process of preparing a tea composition comprising a step of mixing from 85 to 99.99 parts by weight tea material with 0.01 to 0.5 parts by weight *Vitiveria zizanioides* or extract or oil derived therefrom.

11. A process as claimed in claim 10 including the steps of:
a. forming an emulsion of from 0.01 to 5 parts by weight of a food grade binder in water at a weight ratio from 1:2 to 1:10;
b. blending from 0.01 to 0.5 parts by weight of the extract or oil of *Vitiveria zizanioides* with the emulsion to form a flavour coating blend;
c. mixing the flavour coating blend with 85 to 99.99 parts by weight of the tea material to form a mixed material, and;
d. drying the mixed material to reduce the moisture content below 10 parts by weight to obtain the tea composition.

12. A process as claimed in claim 11 wherein the step (c) includes mixing the flavour coating blend with from 5 to 80 parts by weight of the tea material to prepare a premix, followed by mixing the premix with the balance of 5 to 94.99 parts by weight of the tea material.

13. A process as claimed in claim 11 or 12 wherein the step (b) includes blending 0.01 to 1 parts by weight mint flavour with the extract or oil of *Vitiveria zizanioides* and the emulsion.

14. Use of a tea composition according to any one of claims 1 to 9 for providing cooling sensation to an individual consuming a hot beverage prepared therefrom.

## Patentansprüche

1. Tee-Zusammensetzung, umfassend 85 bis 99,99 Gewichts-% Teematerial und 0,01 bis 0,5 Gewichts-% Vitiveria zizanioides oder davon stammender Extrakt oder davon stammendes Öl.

2. Tee-Zusammensetzung, wie sie in Anspruch 1 beansprucht ist, umfassend 0,02 bis 0,4 Gewichts-% Vitiveria zizanioides oder davon stammender Extrakt oder davon stammendes Öl.

3. Tee-Zusammensetzung, wie sie in Anspruch 1 oder Anspruch 2 beansprucht ist, die außerdem 0,01 bis 1 % Minze-Aroma umfasst.

4. Tee-Zusammensetzung, wie sie in Anspruch 3 beansprucht ist, wobei das Minze-Aroma aus Pfefferminzaroma, Krauseminze-Aroma und einem Gemisch davon ausgewählt ist.

5. Tee-Zusammensetzung, wie sie in einem der vorangehenden Ansprüche beansprucht ist, wobei Vitiveria zizanioides oder der davon stammende Extrakt oder das davon stammende Öl wenigstens 10 Gewichts-% Vetiverol umfasst.

6. Tee-Zusammensetzung, wie sie in einem der vorangehenden Ansprüche beansprucht ist, die 0,05 Gewichts-% bis 5 Gewichts-% Bindemittel mit Lebensmittelqualität umfasst.

7. Tee-Zusammensetzung, wie sie in Anspruch 6 beansprucht ist, wobei das Bindemittel aus einem Polysaccharid, natürlicher oder modifizierter Stärke, Gummi, nicht raffiniertem Zucker und einem Gemisch davon ausgewählt ist.

8. Tee-Zusammensetzung, wie sie in Anspruch 7 beansprucht ist, wobei das Bindemittel eine modifizierte Stärke umfasst.

9. Tee-Zusammensetzung, wie sie in einem der vorangehenden Ansprüche beansprucht ist, wobei das Teematerial schwarzer Tee ist.

10. Verfahren zur Herstellung einer Tee-Zusammensetzung, umfassend einen Schritt des Mischens von 85 bis 99,99 Gewichtsteilen Teematerial mit 0,01 bis 0,5 Gewichtsteilen Vitiveria zizanioides oder davon stammendem Extrakt oder davon stammendem Öl umfasst.

11. Verfahren, wie es in Anspruch 10 beansprucht ist, umfassend die Schritte:
a. Bilden einer Emulsion aus 0,01 bis 5 Gewichtsteilen eines Bindemittels mit Lebensmittelqualität in Wasser mit einem Gewichtsverhältnis von 1:2 bis 1:10;
b. Mischen von 0,01 bis 0,5 Gewichtsteilen des Extrakts oder Öls von Vitiveria zizanioides mit der Emulsion unter Bildung einer Aromabeschichtungsmischung;
c. Mischen der Aromabeschichtungsmischung mit 85 bis 99,99 Gewichtsteilen des Teematerials unter Bildung eines gemischten Materials und
d. Trocknen des gemischten Materials, um den Feuchtigkeitsgehalt auf unter 10 Gewichtsteile zu reduzieren, wodurch die Tee-Zusammensetzung erhalten wird.

12. Verfahren, wie es in Anspruch 11 beansprucht ist, wobei der Schritt (c) das Mischen der Aromabeschichtungsmischung mit 5 bis 80 Gewichtsteilen des Teematerials unter Herstellung einer Vormischung, gefolgt vom Mischen der Vormischung mit dem Rest aus 5 bis 94,99 Gewichtsteilen des Teematerials, enthält.

13. Verfahren, wie es in Anspruch 11 oder 12 beansprucht ist, wobei der Schritt (b) Mischen von 0,01 bis 1 Gewichtsteile(n) Minze-Aroma mit dem Extrakt oder Öl von Vitiveria zianioides und der Emulsion umfasst.

14. Verwendung einer Tee-Zusammensetzung gemäß einem der Ansprüche 1 bis 9 zur Bereitstellung einer Kühlungsempfindung bei einem Individuum, das ein daraus hergestelltes heißes Getränk konsumiert.

## Revendications

1. Composition de thé comprenant de 85 à 99,99 % en poids de matériau de thé, et de 0,01 à 0,5 % en poids de *Vitiveria zizanioides* ou d'extrait ou d'huile dérivé de celui-ci.

2. Composition de thé selon la revendication 1 comprenant 0,02 à 0,4 % en poids de *Vitiveria zizanioides* ou d'extrait ou d'huile dérivé de celui-ci.

3. Composition de thé selon la revendication 1 ou la revendication 2 comprenant, en outre, de 0,01 à 1 % de saveur de menthe.

4. Composition de thé selon la revendication 3, dans laquelle ladite saveur de menthe est choisie parmi la saveur de menthe poivrée, la saveur de menthe verte, ou leur mélange.

5. Composition de thé selon l'une quelconque des revendications précédentes, dans laquelle ledit *Vitiveria zizanioides* ou extrait ou huile dérivé de celui-ci comprend au moins 10 % en poids de vétivérol.

6. Composition de thé selon l'une quelconque des revendications précédentes comprenant 0,05 à 5 % en poids d'un liant de qualité alimentaire.

7. Composition de thé selon la revendication 6, dans laquelle ledit liant est choisi parmi un polysaccharide, un amidon naturel ou modifié, une gomme, un sucre non raffiné, ou un mélange de ceux-ci.

8. Composition de thé selon la revendication 7, dans laquelle ledit liant comprend un amidon modifié.

9. Composition de thé selon l'une quelconque des revendications précédentes, dans laquelle ledit matériau de thé est le thé noir.

10. Procédé de préparation d'une composition de thé comprenant une étape de mélange de 85 à 99,99 parties en poids de matériau de thé avec 0,01 à 0,5 partie en poids de *Vitiveria zizanioides* ou extrait ou huile dérivé de celui-ci.

11. Procédé selon la revendication 10 incluant les étapes de :
a. formation d'une émulsion constituée de 0,01 à 5 parties en poids d'un liant de qualité alimentaire dans de l'eau, à un rapport en poids de 1:2 à 1:10 ;
b. mélange de 0,01 à 0,5 partie en poids d'extrait ou d'huile de *Vitiveria zizanioides* dans l'émulsion pour former un mélange d'enrobage dégageant une saveur ;
c. mélange du mélange d'enrobage dégageant une saveur avec 85 à 99,99 parties en poids de matériau de thé pour former un matériau mixte ; et
d. séchage du matériau mixte pour abaisser la teneur en humidité au-dessous de 10 parties en poids pour obtenir la composition de thé.

12. Procédé selon la revendication 11, dans lequel l'étape (c) comprend le mélange du mélange d'enrobage dégageant une saveur avec de 5 à 80 parties en poids du matériau de thé pour préparer un prémix, suivi par le mélange du prémix avec le reste de 5 à 94,99 parties en poids du matériau de thé.

13. Procédé selon les revendications 11 ou 12, dans lequel l'étape (b) comprend l'incorporation de 0,01 à 1 partie de saveur de menthe dans l'extrait ou l'huile de *Vitiveria zizanioides* et l'émulsion.

14. Utilisation d'une composition de thé selon l'une quelconque des revendications 1 à 9 pour procurer une sensation de fraîcheur à un individu consommant une boisson très chaude préparée à partir de celle-ci.
